# EUROPEAN PATENT APPLICATION

(11) **EP 4 818 885 A1**
(43) Date of publication of application: **07.10.2026**
(21) Application number: 24902137.9
(22) Date of filing: 05.08.2024
(51) Int. Cl.: G06F 8/30

(54) **CODE GENERATION METHOD AND RELATED DEVICE**

(30) Priority: 14.12.2023 CN 202311723682; 15.03.2024 CN 202410305635
(71) Applicant: Huawei Cloud Computing Technologies Co., Ltd., Guiyang, Guizhou 550025 (CN)
(72) Inventor: SHEN, Bo, Guiyang, Guizhou 550025 (CN); GUO, Yuenan, Guiyang, Guizhou 550025 (CN); YU, Ailun, Guiyang, Guizhou 550025 (CN)
(74) Representative: Maiwald GmbH
(86) International application number: PCT/CN2024/109840
(87) International publication number: WO 2025/123711

(57) **Abstract**

This application discloses a code generation method, including: A code development platform receives a code generation task, and extracts a code context based on the code generation task, where the code context includes a code fragment related to to-be-generated code in a project; the code development platform determines, based on the code context by using a language model, whether to call an application programming interface API of a language service; when it is determined to call the API of the language service, the code development platform sends an API call request to the language service and obtains an API call response of the language service; and the code development platform performs inference based on the code context and the API call response of the language service by using the language model, to obtain generated code. The method empowers the language model the capability of autonomously calling external tools such as the language service, so that during inference, the language model can simulate a human developer using the language service to assist the language model in code generation, thereby mitigating or even eliminating hallucinations generated by the language model during code generation.

## Description

This application claims priority to Chinese Patent Application No. 202311723682.4, filed with the China National Intellectual Property Administration on December 14, 2023 and entitled "CODE GENERATION METHOD AND RELATED DEVICE", and to Chinese Patent Application No. 202410305635.6, filed with the China National Intellectual Property Administration on March 15, 2024 and entitled "CODE GENERATION METHOD AND RELATED DEVICE", which are incorporated herein by reference in their entireties.

### TECHNICAL FIELD

This application relates to the field of artificial intelligence (artificial intelligence, AI) technologies, and in particular, to a code generation method, a code development platform, a compute device cluster, a computer-readable storage medium, and a computer program product.

### BACKGROUND

As software grows in scale and complexity, an increasing number of developers are attempting to perform software development using code generation (code generation) technologies. Code generation aims to reduce manual programming workloads of developers and improve code research and development efficiency, attracting wide attention in both the academic and industrial sectors of software engineering (software engineering, SE). In recent years, thanks to advances in artificial intelligence (artificial intelligence, AI) research, particularly in natural language processing, and breakthroughs in large language models (large language models), achievements in large language models have driven code generation technologies from academic research towards practical applications. Consequently, a variety of intelligent programming assistant products based on large language models have emerged.

Intelligent programming assistant products mainly focus on text-to-code (Text2Code) scenarios, generating code that implements developer requirements described in natural language. Specifically, during the writing process, a developer writes functional annotations for the code and triggers code generation. An intelligent programming assistant product can then utilize a generative pre-trained transformer (generative pre-trained transformer, GPT) model to generate, based on the annotations provided by the developer and related information, code fragments implementing the functions described by the annotations. The intelligent programming assistant product may present the code fragment to the developer in the form of a recommendation, allowing the developer to accept or reject the recommendation, or to accept and further modify the recommendation.

However, in practical code development projects, the generation of service logic code generation often performs poorly, and the generated code includes methods or variables that do not actually exist, also referred to as hallucination, resulting in a low code acceptance rate and making it difficult to satisfy service requirements.

### SUMMARY

This application provides a code generation method. The method empowers a language model with the capability of autonomously calling external tools such as a language service, so that during inference, the language model can simulate a human developer using the language service to assist the language model in code generation, thereby mitigating or even eliminating hallucinations generated by the language model during code generation, and improving the usability and accuracy of code generated by intelligent programming assistants in practical development scenarios. This application further provides a code development platform, a compute device cluster, a computer-readable storage medium, and a computer program product that correspond to the method.

According to a first aspect, this application provides a code generation method. The method may be performed by a code development platform. The code development platform may be software. The software may be software that runs independently, or may be integrated into other software, for example, a functional module in an integrated development environment, a plug-in in an integrated development environment, or a code editor. The software may be deployed in a compute device cluster, and the compute device cluster executes program code of a software system, to perform the code generation method in this application. In some examples, the code development platform may alternatively be hardware, for example, a compute device cluster that provides a code generation capability. When the compute device cluster runs, the code generation method in this application is performed.

Specifically, the code development platform receives a code generation task, where the code generation task is used to perform code generation based on input information of a user. Then the code development platform extracts a code context based on the code generation task. The code context includes a code fragment related to to-be-generated code in a project. The code development platform determines, based on the code context by using a language model, whether to call an application programming interface (application programming interface, API) of a language service. When it is determined to call the API of the language service, the code development platform may send an API call request to the language service and obtain an API call response of the language service. The language service is used to assist in generating the code, and the API call response includes at least one recommended result of the language service. The code development platform performs inference based on the code context and the API call response of the language service by using the language model, to obtain the generated code.

The method empowers the language model with the capability of autonomously calling external tools such as a language service, so that during inference, the language model can simulate a human developer using functions of the language service, such as automatic completion, prompt recommendation, and jump-to-view in the integrated development environment, to assist the language model in code generation, thereby mitigating or even eliminating hallucinations generated by the language model during code generation, avoiding an error report in the IDE directly caused by the generated code, and ultimately improving the usability and accuracy of code generation of intelligent programming assistants in practical development scenarios.

In some possible implementations, the code development platform may perform code generation based on the code context by using the language model, to obtain a current result; and if the current result includes an API call identifier, determine to call the API of the language service. In the method, code generation is performed based on the code context by using the language model, and then whether to call the API of the language service is determined based on whether the current result output by the language model includes the API call identifier, to implement support for code generation without an API call or code generation based on an API call, thereby improving compatibility on a premise of ensuring code generation quality.

In some possible implementations, the code development platform may further predict, by using the language model, whether to request user assistance. User assistance means that the user participates in the code generation process, and provides help for the language model to perform code generation. If yes, the code development platform may receive a response from the user, where the response from the user includes a selection result of the user with respect to the API call response.

In the method, the user assistance is introduced, so that the user selects one or more results from results returned by the language service, and a process of selection from an IDE completion list like that in a programming process of the human developer is simulated, to achieve human-machine collaborative pair programming, thereby further improving the code generation quality and code acceptance rate.

In some possible implementations, the code development platform may obtain a perplexity of the language model without the API call response and a perplexity of the language model with the API call response. The perplexity is used to measure the quality of sample prediction of a probability distribution or a probability model. A probability model with a low perplexity can better predict a sample. Specifically, in this application, the probability model may be a language model. Therefore, the perplexity may be used to measure the quality of code prediction of the language model. Generally, a smaller perplexity represents a more accurate language model and a better code generation effect. When a difference between the perplexities is greater than a threshold, the code development platform may determine to request user assistance.

In this way, the quality of code prediction of the language model may be measured through quantized perplexities, to determine whether to request user assistance, thereby providing a gain for the language model to perform code generation.

In some possible implementations, the code development platform may detect whether a generation result of the language model includes an identifier for requesting user assistance; and if yes, the code development platform determines to request user assistance. The method supports the code development platform in autonomously choosing, based on the generation result of the language model, whether to request user assistance, thereby improving compatibility and usability on a premise of ensuring code generation quality.

In some possible implementations, the code development platform may further determine at least one of a type, a parameter, or a timing of an API call of the language service based on the code context. Accordingly, the code development platform may generate the API call request based on the type or the parameter of the API call of the language service, and send the API call request to the language service based on the timing.

In the method, the code development platform may dynamically select the type, the parameter, and the timing of the API call based on the code context instead of being not limited to one or two fixed language services that are selected. In addition, the language model may autonomously determine the timing of the call, and this is more suitable for a real code development scenario, thereby improving code generation quality.

In some possible implementations, the code development platform may further obtain a training set, where the training set includes training data that carries an API call, and the training data that carries an API call includes a project-level code context sample, an API call response sample, and a predicted code sample. Then the code development platform may perform fine-tuning on a base model based on the training set, to obtain the language model.

In the method, by performing fine-tuning on the base model by using the training data that carries an API call, a training process can be aligned to the inference process. Compared with a manner in which model behaviors are affected only by external intervention in an inference phase, for example, an attempt to affect a single-step sampling probability of a large model only in a manner of external intervention by using a language service or a static analysis method in the inference phase, in this application, tool calling behaviors are added to the training data in the training phase of the model, so that the language model better conforms to an expected behavior through training, and the language model is empowered with the capability of autonomously obtaining external information and reducing hallucination.

In some possible implementations, the training set further includes training data that does not carry an API call, and the training data that does not carry an API call includes a code context sample and a predicted code sample. Accordingly, the code development platform may perform hybrid fine-tuning on the base model based on the training data that carries an API call and the training data that does not carry an API call, to obtain the language model.

Performing fine-tuning by using the training data that does not carry an API call can maintain a code generation capability, and performing fine-tuning by using the training data that carries an API call can empower the capability of calling the API and the capability of utilizing external information (for example, an API call response), thereby providing high usability.

In some possible implementations, the training data is collected in the following manner:
the code development platform generates the training data according to a heuristic rule constructed based on a scenario in which a human developer calls the language service; or
the code development platform constructs the training data based on an interaction event record of an integrated development environment IDE; or
the code development platform constructs the training data based on annotation information of the user.

The code development platform generates the training data according to a heuristic rule constructed based on a scenario in which a human developer calls the language service, thereby implementing a basic capability of constructing the language model at a low cost. The code development platform constructs the training data based on an interaction event record of an integrated development environment IDE, so that reliability and diversity of the training data can be improved by collecting real behaviors of the human developer, thereby improving a generalization capability of the language model. The code development platform constructs the training data based on annotation information of the user about annotations of code hallucination, thereby enhancing the capability of the language model to cope with a scenario in which hallucination frequently occurs.

In some possible implementations, the language service includes an auxiliary programming service. The auxiliary programming service is used to assist in code development, for example, to assist the human developer in developing the code, or to assist the language model in generating the code. For example, the language service may be a code completion service, a prompt recommendation service, or a jump-to-view service in the IDE. The method is not limited to a specific language service type, and can support calling a plurality of auxiliary programming services to assist the language model in generating the code, thereby improving code generation quality.

In some possible implementations, the code development platform may perform inference based on the code context, the API call request of the language service, and the API call response of the language service by using the language model, to obtain the generated code. In the method, prompt information input to the language model is constructed by using a structure of the code context, the API call request of the language service, the API call response of the language service, and a development process as with the human developer is simulated, so that the language model can autonomously perform weighing, comprehensively utilize context information and language service information, and focus on current key information, thereby improving prediction quality of the language model and mitigating the problem of hallucination.

According to a second aspect, this application provides a code development platform. The code development platform includes:
an interaction module, configured to receive a code generation task, where the code generation task is used to perform code generation based on input information of a user;
a code context processing module, configured to extract a code context based on the code generation task, where the code context includes a code fragment related to to-be-generated code in a project; and
an inference module, configured to determine, based on the code context by using a language model, whether to call an application programming interface API of a language service.

The code context processing module is further configured to: when it is determined to call the API of the language service, send an API call request to the language service and obtain an API call response of the language service, where the language service is used to assist in generating the code, and the API call response includes at least one recommended result of the language service.

The inference module is further configured to perform inference based on the code context and the API call response of the language service by using the language model, to obtain the generated code.

In some possible implementations, the inference module is specifically configured to:
perform code generation based on the code context by using the language model, to obtain a current result; and
if the current result includes an API call identifier, determine to call the API of the language service.

In some possible implementations, the inference module is further configured to:
predict, by using the language model, whether to request user assistance; and
the interaction module is further configured to: if yes, receive a response from the user, where the response from the user includes a selection result of the user with respect to the API call response.

In some possible implementations, the inference module is specifically configured to:
obtain a perplexity of the language model without the API call response and a perplexity of the language model with the API call response; and
when a difference between the perplexities is greater than a threshold, determine to request user assistance.

In some possible implementations, the inference module is specifically configured to:
detect whether a generation result of the language model includes an identifier for requesting user assistance; and
if yes, determine to request user assistance.

In some possible implementations, the code context processing module is further configured to:
determine at least one of a type, a parameter, or a timing of an API call of the language service based on the code context; and
the code context processing module is specifically configured to:
   generate the API call request based on the type or the parameter of the API call of the language service; and
   send the API call request to the language service based on the timing.

In some possible implementations, the code development platform further includes:
a training module, configured to obtain a training set, where the training set includes training data that carries an API call, and the training data that carries an API call includes a project-level code context sample, an API call response sample, and a predicted code sample; and
the training module is further configured to perform fine-tuning on a base model based on the training set, to obtain the language model.

In some possible implementations, the training set further includes training data that does not carry an API call, and the training data that does not carry an API call includes a code context sample and a predicted code sample; and
the training module is specifically configured to:
perform hybrid fine-tuning on the base model based on the training data that carries an API call and the training data that does not carry an API call, to obtain the language model.

In some possible implementations, the training module is specifically configured to:
generate the training data according to a heuristic rule constructed based on a scenario in which a human developer calls the language service; or
construct the training data based on an interaction event record of an integrated development environment IDE; or
construct the training data based on annotation information of the user.

In some possible implementations, the language service includes an auxiliary programming service.

According to a third aspect, this application provides a compute device cluster. The compute device cluster includes at least one compute device, and the at least one compute device includes at least one processor and at least one memory. The at least one processor and the at least one memory communicate with each other. The at least one processor is configured to execute instructions stored in the at least one memory, to enable the compute device or the compute device cluster to perform the code generation method according to any one of the first aspect or the implementations of the first aspect.

According to a fourth aspect, this application provides a computer-readable storage medium. The computer-readable storage medium stores instructions, and the instructions instruct a compute device or a compute device cluster to perform the code generation method according to any one of the first aspect or the implementations of the first aspect.

According to a fifth aspect, this application provides a computer program product including instructions. When the computer program product runs on a compute device or a compute device cluster, the compute device or the compute device cluster is enabled to perform the code generation method according to any one of the first aspect or the implementations of the first aspect.

Based on the implementations provided in the foregoing aspects, this application may perform further combination in this application to provide more implementations.

### BRIEF DESCRIPTION OF DRAWINGS

To describe the technical methods in embodiments of this application more clearly, the following briefly describes the accompanying drawings for describing embodiments.
FIG. 1 is a diagram of an architecture of a code development platform according to this application;
FIG. 2 is a flowchart of streaming inference according to this application;
FIG. 3 is a diagram of an example of multi-task hybrid fine-tuning according to this application;
FIG. 4 is a flowchart of a code generation method according to this application;
FIG. 5 is a diagram of a code editing interface according to this application;
FIG. 6 is an interaction diagram of code generation in an inference phase according to this application;
FIG. 7 is a flowchart of training a language model according to this application;
FIG. 8 is a diagram of a code format of training data according to this application;
FIG. 9 is a diagram of a code format of training data including chained API calls according to this application;
FIG. 10 is a diagram of a structure of a code development platform according to this application;
FIG. 11 is a diagram of a structure of a compute device according to this application;
FIG. 12 is a diagram of a structure of a compute device cluster according to this application;
FIG. 13 is a diagram of a structure of another compute device cluster according to this application; and
FIG. 14 is a diagram of a structure of still another compute device cluster according to this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

Code generation (code generation) means automatically generating code based on input information of a user, for example, incomplete code or a natural language description, by using an automation tool or technology, so that the code is complete or a function described in the natural language description is implemented. Code generation may include line-level code generation and method-level code (or referred to as function-level code) generation, depending on different granularities of generation code.

A large language model (large language model, LLM) is a language model including an artificial neural network with many parameters (usually billions of weights or more), and uses self-supervised learning or semi-supervised learning to train a large amount of unlabeled text. Large language models may be classified into different types based on different model architectures. Large language models widely used in the code generation field include a generative pre-trained transformer (generative pre-trained transformer, GPT) model.

An intelligent programming assistant product based on a large language model such as the GPT supports generating, based on annotations provided by a developer and related information, a code fragment for implementing a function described in the annotations. According to user feedback and large-scale survey results in a public beta test phase, the intelligent programming assistant product can effectively reduce costs brought by the developer's frequent switching between activities such as actual code writing and knowledge search, document query, and search for a reusable component, thereby improving software development efficiency. However, in a code development project in an actual application scenario, a service logic code generation effect is poor. Specifically, the generated code includes a method or a variable (which is usually referred to as hallucination in the AI field) that does not exist at all.

The inventor finds through research that, a code generation model in the intelligent programming assistant product is usually obtained through training based on an LLM such as the GPT, where training and inference manners of the code generation model originate from a natural language processing (natural language processing, NLP) technology without fully considering a logical structure of the code project and a common call relationship between code file content. Details are as follows.

In a model training phase, the LLM processes a training corpus in a sequence in a natural language manner, and this does not accord with a logical habit in actual code development. In addition, a training manner used by the LLM is preceding text-following text autoregressive training based on a text form, without the capability of introducing context content into the model and calling an external tool (for example, an automatic completion tool or a prompt recommendation tool).

In a model inference phase, a range of context that can be sensed by the LLM based on autoregressive training is naturally limited to text content of a current file. The generated code may easily contain a call to code that does not exist in the project, but existent code in the project cannot be correctly called.

Therefore, it can be learned that compared with other software development tools, the LLM-based intelligent programming assistant product is still at an initial stage. How to eliminate or mitigate the hallucination in code generation is still to be continuously explored in practice. Different optimization solutions are proposed in the industry to eliminate or mitigate the hallucination in code generation.

A typical optimization solution is a method of using a global context to guide a language model of code, and this method guides the language model by using monitors (monitors). Specifically, in this solution, a code completion suggestion is generated through static analysis, and a constraint of code generation is implemented by changing a probability distribution that is output by the language model. Experimental results show that this method can significantly improve the quality of code generation.

However, this method introduces monitors through rule definition, and supports only a few cases or scenarios according to experiments. In addition, due to data organization and a training target definition manner during pre-training, whether a context is sufficient and authentic cannot be determined merely by relying on a large model, and an existing method cannot dynamically, autonomously, and instantly introduce external information to prevent the problem of hallucination.

In view of this, this application provides a code generation method. The method is intended to empower a language model (for example, the LLM) with the capability of autonomously calling software development tools (which may also be collectively referred to as language services), for example, capability provided by a software development tool by using an application programming interface (application programming interface, API), to alleviate a current limitation of an intelligent programming assistant in code generation and innovatively propose a method for resolving hallucination in code generation by enabling the language model to autonomously call a language service. Inspired by a programming process of a human developer, the method is intended to simulate a code writing process (that is, a programming site of the human developer) of humans in an integrated development environment (integrated development environment, IDE). Through training, the language model is enabled to call a tool such as a language service to use the IDE (or other auxiliary programming services, collectively referred to as language services) to assist the language model in "writing" code. Specifically, by constructing a training set that includes language service calling behaviors, the language model may be trained through tool learning (tool learning, which is a training method that enables the language model to learn to generate a tool call) to have the capability of autonomously calling the language service so that, in an inference process, the language model can simulate a human in using functions such as automatic completion, prompt recommendation, and jump-to-view of the IDE to assist the language model in code generation, and can even allow the human developer to help the language model make selection from information provided by the language service, thereby effectively alleviating low practicability and a low acceptance rate of code generation due to hallucinations.

The code generation method may be performed by a code development platform. The code development platform may be software. The software may be software that runs independently, or may be integrated into other software, for example, a functional module in the IDE, a plug-in integrated into the IDE, or a code editor. The software may be deployed in a compute device cluster, and the compute device cluster executes program code of a software system, to perform the code generation method in this application. The software may be provided in a form of a software package to a user. For example, the software may be provided as a client code editor or a new function of the IDE to the user along with version update or iteration, or provided as a new feature of a code generation plug-in based on a pre-trained language model to the user along with version update or iteration. The user may run the software package in a local data center or a private cloud to deploy the software. Alternatively, the software may be provided in a form of a cloud service, for example, software as a service (software as a service, SaaS), to the user. For example, the software may appear as a cloud code editor or an auxiliary coding function of a development environment, and expose a functional interface externally in a form of a cloud service, for example, an application programming interface (application programming interface, API). Another tool may use the foregoing code generation function or capability by calling the interface. In some possible implementations, the code development platform may alternatively be hardware, for example, a compute device cluster that provides a code generation capability. When the compute device cluster runs, the code generation method in this application is performed.

Specifically, the code development platform may receive a code generation task, where the code generation task is used to perform code generation based on input information of a user; and the code development platform extracts a code context based on the code generation task, where the code context includes a code fragment related to to-be-generated code in a project. Then the code development platform determines, based on the code context by using a language model, whether to call an application programming interface API of a language service. When it is determined to call the API of the language service, the code development platform sends an API call request to the language service and obtains an API call response of the language service. The language service is used to assist in generating the code. The API call response may include at least one recommended result of the language service, for example, at least one completion result of an automatic completion service, at least one prompt of a prompt recommendation service, or at least one segment of code of a jump-to-view service. The code development platform performs inference based on the code context and the API call response of the language service by using the language model, to obtain the generated code.

The method empowers the language model the capability of autonomously calling an external tool such as a language service,so that during inference, the language model can simulate a human developer in using functions of the language service, such as automatic completion, prompt recommendation, and jump-to-view in the IDE, to assist the language model in code generation, thereby mitigating or even eliminating hallucinations generated by the language model during code generation, avoiding an error report in the IDE directly caused by the generated code, and ultimately improving the usability and accuracy of code generation of intelligent programming assistants in practical development scenarios.

To make the technical solutions of this application clearer and easier to understand, the following first introduces a system architecture of the code development platform in this application.

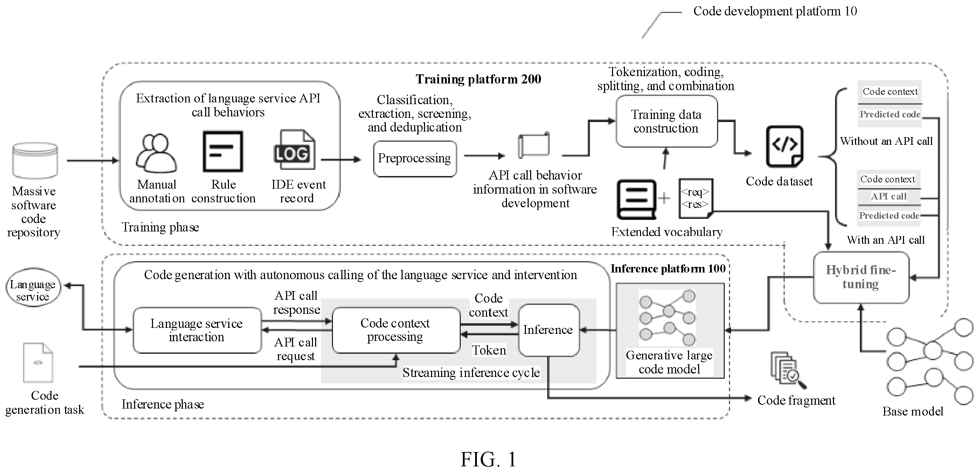

Refer to a diagram of an architecture of a code development platform shown in FIG. 1. The code development platform 10 includes an inference platform 100, and the inference platform 100 is configured to perform inference based on a trained language model, to obtain generated code. Further, the code development platform 10 may further include a training platform 200, and the training platform 200 is configured to perform fine-tuning on a base model based on training data that carries an API call, to obtain the language model. The language model is a model used to generate the code, and is also known as a code generation model. The code generation model may be a large model, for example, the LLM. On this basis, the code generation model may be a large code generation model, or referred to as a large code model or a large generative code model.

An inference process is performed in an inference phase, and a training process is performed in a training phase. The following separately describes in detail the inference process of the inference platform 100 and the training process of the training platform 200.

The inference platform 100 is configured to receive a code generation task, where the code generation task is used to perform code generation based on input information of a user; and then extract a code context based on the code generation task, where the code context includes a code fragment related to to-be-generated code in a project. For example, the inference platform 100 may include a code context processing module. The code context processing module is configured to receive the code generation task, and extract the code context based on the code generation task. The inference platform 100 is further configured to determine, based on the code context by using the language model, whether to call an API of a language service. In the example in FIG. 1, the language model may be a large generative code model, and the language service may be an auxiliary programming service, for example, a code completion service, a prompt recommendation service, or a jump-to-view service in an IDE. The language service is used to assist in generating the code. For example, the inference platform 100 may include an inference service. The code context processing module may provide the code context to the inference service. The inference service may perform inference based on the code context by calling the large generative code model, to determine whether to call an API of the auxiliary programming service. Specifically, a generation result includes an API call identifier (token), for example, ls_request or ls_req, where ls represents a language server (language server), and req represents a request, indicating that the API of the language service needs to be called.

The inference platform 100 is further configured to: when it is determined to call the API of the language service, send an API call request to the language service, obtain an API call response of the language service, and perform inference based on the code context and the API call response of the language service by using the language model, to obtain the generated code. The API call response includes at least one recommended result of the language service. Further, to improve performance of the language model, the inference platform 100 may perform inference based on the code context, the API call request of the language service, and the API call response of the language service by using the language model, to obtain the generated code. As shown in FIG. 1, the code context processing module of the inference platform 100 may send an API call request to the auxiliary programming service and obtain an API call response returned by the auxiliary programming service. The context processing module may concatenate the code context with the API call request and the API call response, to obtain a new code context, to perform a streaming inference cycle. Specifically, the context processing module may provide the new context to the inference service, and the inference service calls the large generative code model to continue to perform code generation.

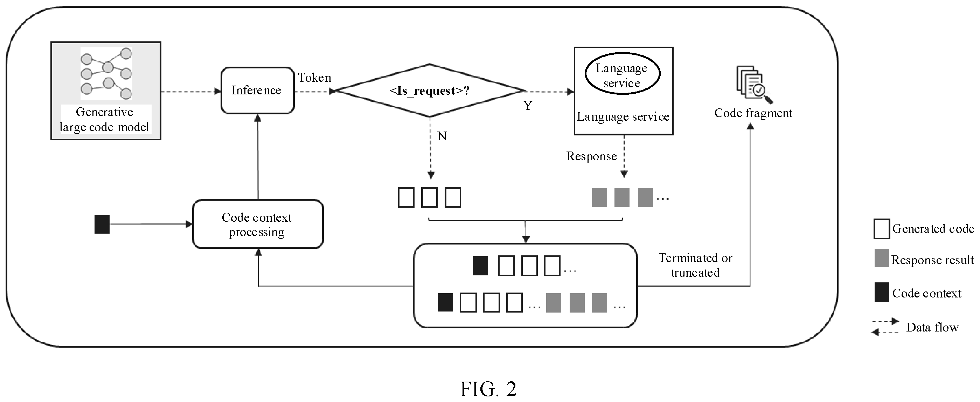

FIG. 2 is a flowchart of streaming inference. In the inference phase, the inference platform 100 may use streaming inference with real-time intervention, to implement interaction between the language model and the language service. FIG. 2 shows a basic process. Based on the code context, the inference service calls the large generative code model to perform generation in streaming mode to obtain a current result, determines whether the current result includes <ls_request>, and if no, continues to perform the generation; or if yes, calls the language service, concatenates the API response of the language service to the code context, and continues to perform the generation. The foregoing streaming inference is cyclically performed until it is terminated or truncated, to obtain an ultimate code fragment (which is the generated code).

In some possible implementations, the inference platform 100 further supports the human developer in intervening in code generation. Specifically, the inference platform 100 allows the human developer (such as the user) to assist the language model in performing inference in the inference process. For example, the inference platform 100 (or the inference service) may monitor changes in a perplexity (perplexity, PPL) of the language model after the API call response (a result returned by the language service) is added, and may generate (or insert) a token for requesting user assistance when the PPL has significantly increased, so that the user makes selection from a result returned by the language service, to simulate a process of selection from an IDE completion list like that in a programming process of the human developer, thereby achieving human-machine collaborative pair programming. User assistance means that the user participates in the code generation process, and provides help for the language model to perform code generation. For example, the user may select one recommended result from the at least one recommended result output by the language service, and provide the recommended result to the language model to perform code generation. The language service may be a code completion service, and the recommended result may be at least one code completion result recommended by the code completion service.

A key to implementing code generation in this application is the language model. The following describes a process in which the training platform 200 performs training to obtain the language model.

The training platform 200 is configured to obtain a training set, where the training set includes training data that carries an API call, and the training data that carries an API call may include a project-level code context sample, an API call response sample, and a predicted code sample, for example, a project-level code context sample, an API call response sample, and a predicted code sample that are extracted from a massive code repository; and then perform fine-tuning on the base model based on the training set, to obtain the language model. Fine-tuning (fine-tuning) means that further training (or referred to as retraining) is performed on the basis of a pre-trained model (for example, the base model) by using a specific dataset, so that the trained model adapts to a specific task or field. Further, the training set further includes training data that does not carry an API call, and the training platform 200 is configured to perform hybrid fine-tuning on the base model based on the training data that carries an API call and the training data that does not carry an API call, to obtain the language model. Hybrid fine-tuning, also referred to as multi-task hybrid fine-tuning, means retraining the pre-trained model on a multi-task hybrid dataset (for example, a training set in which training data that carries an API call is mixed with training data that does not carry an API call), to improve performance of the trained model on all tasks.

FIG. 1 is used again as an example for description. The training set may be a code dataset in FIG. 1. The training data that carries an API call includes a code context sample, an API call response sample, and a predicted code sample. The training data that does not carry an API call includes a code context sample and a predicted code sample. In the training phase, the training platform 200 may process code in the massive software code repository, to construct the training data.

To construct a high-quality and diversified training set for the language model to learn a timing of and a method for calling the API, the training platform may collect the training data by using different manners or channels.

In one manner, the training platform 200 may be configured to generate the training data according to a heuristic rule constructed based on a scenario in which a human developer calls the language service. The heuristic rule, also referred to as a heuristic algorithm (heuristic algorithm) or a heuristic rule algorithm, is a method for performing discovery according to an empirical rule. A characteristic of the heuristic rule is that past experience is used to select an effective method to solve a problem instead of systematically seeking for an answer by using definite steps. The heuristic rule can greatly reduce a quantity of attempts in a limited search space to quickly solve the problem. In embodiments, the training platform 200 may construct a heuristic rule algorithm based on a scenario in which there is a high probability that the human developer calls the language service, for example, a scenario of member reference, object construction, or function calling, thereby implementing a basic capability of constructing the language model at a low cost.

In another manner, the training platform 200 may construct the training data based on an interaction event record of an integrated development environment IDE. Specifically, the training platform 200 may extract an API calling behavior from the interaction event record, extract an API call response sample based on the API calling behavior, extract a context sample and a predicted code sample (expected code to be generated) from a code repository of the project, and then assemble the context sample, the API call response sample, and the predicted code sample into the training data. Constructing the training data by collecting real behaviors of the human developer can improve reliability and diversity of the training data, thereby improving a generalization capability of the language model.

In still another manner, the training platform 200 may construct the training data based on annotation information of the user. The annotation information is used to annotate code hallucination. The manual annotation manner may enhance the capability of the language model to cope with a scenario in which hallucination frequently occurs.

By using manual annotation, constructing the heuristic rule, and extracting the interaction event record of the IDE and extracting the calling behavior of the language service, the training platform 200 may perform preprocessing, for example, classification, extraction, screening, and deduplication, to obtain IDE usage behavior data of a coding site of the human developer. The training platform 200 may perform tokenization, coding, splitting, and combination on the IDE usage behavior data of the coding site of the human developer, to construct the training data. Herein, splitting and combination means that the data is classified (for example, involving API calls and involving no API calls) based on different tasks and then concatenated to form training data in a specified form.

The training platform 200 may establish an extended vocabulary to construct the training data. To simulate a behavior of triggering, when the human developer is writing code, a language service call request to obtain auxiliary information, this solution introduces special tokens used to mark an API call request, such as <ls_request> and <ls_response>. When the model generates this token, the model starts to call the API and receives a result. Further, this solution may further introduce special tokens for requesting user assistance to perform selection, such as <user_request> and <user_response>, which are used to mark a timing for requesting human assistance and receive a response from the user. The extended vocabulary may include the foregoing tokens. Further, the extended vocabulary may further include <req> and <res>. The training platform 200 may select a corresponding token from the extended vocabulary, to construct the training data.

The training platform 200 generates the API call request based on the API call token, and adds, to the training data, the API call request and a response result (namely, the API call response) of the language service for the API call request. In addition, the API call supports the language model in calling the API in a chained mode. To be specific, after the response result is received, an API call request continues to be sent, to simulate humans' behavior of a plurality of times of calls in a complex scenario.

The training platform 200 may employ a multi-task hybrid fine-tuning method, to enable the language model to maintain a common code generation capability and empowers the language model with capability of calling the language service and utilizing external information. For example, the training platform may employ three types of tasks for hybrid fine-tuning. The three types of tasks may include the following:
(a) common code generation involving no API call (with a given code context to predict generated code);
(b) API call request generation (with a given code context to predict an API call); and
(c) code generation based on an API call response (return result) (for example, with a given code context, an API call request, and an API call response to predict generated code).

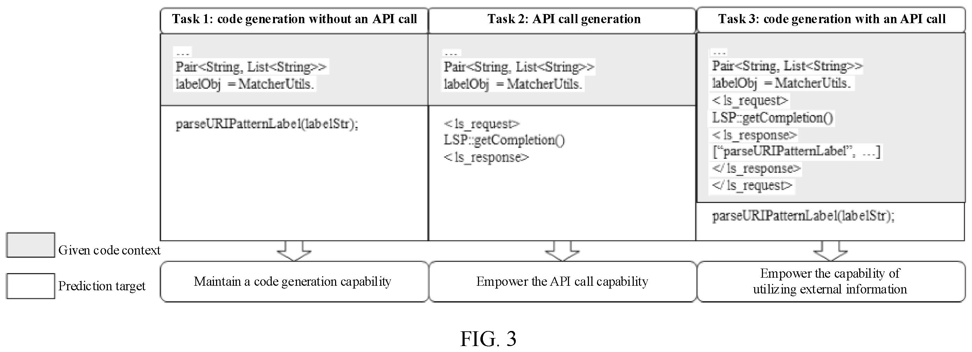

FIG. 3 is a diagram of an example of multi-task hybrid fine-tuning. A plurality of tasks include a task 1, a task 2, and a task 3. The task 1 is code generation without an API call, the task 2 is API call generation, and the task 3 is code generation with an API call. A code generation capability can be maintained by performing fine-tuning through the task 1, the API call capability can be empowered by performing fine-tuning through the task 2, and the capability of utilizing external information (such as an API call response) can be empowered by performing fine-tuning through the task 3.

In this way, the training process can be aligned to the inference process, to build an intelligent framework in which a large code model serves as a scheduling center. In the training phase, by constructing high-quality and diversified training data, the language model is empowered with the capability of calling the language service, so that the language model serves as a brain and a core for commanding and scheduling, the language service serves as a tool aid, and the human developer serves as a pair programmer to provide assistance. Compared with a manner in which model behaviors are affected only by external intervention in the inference phase, for example, an attempt to affect a single-step sampling probability of a large model only in a manner of external intervention by using a language service or a static analysis method in the inference phase, in this solution, tool calling behaviors are added to the training data in the training phase of the model, so that the language model can better conform to an expected behavior through training, that is, simulates humans to obtain a prompt from the IDE, and the language model is empowered with the capability of autonomously obtaining external information and reducing hallucination.

In this application, the language model is empowered with the autonomous capability of calling the language service to autonomously, dynamically, and instantly obtain external context information. The language model may autonomously generate an API call token of the language service in the inference process, dynamically select a type, a parameter, or a timing of an API call of the language service based on a current code context, and then send a language service call request. The API call request of the language service may be executed by an external program. An execution result returned by the external program may be appended to a current context (for example, the current code context) for the language model to continue to perform inference.

Compared with a manner in which information obtaining is isolated from the language model, this solution enables the language model to autonomously select a timing of calling an external tool such as the language service and automatically obtain external information related to current generation. This is closer to a scope of background knowledge required for the human developer in actual programming, and is especially important for object-oriented code generation. In addition, compared with a manner in which external information can only provide a macro reference or intervention for behaviors of the language model, this solution may embed a result of static analysis into a code context of the language model, so that the model autonomously chooses how to utilize the external information.

Compared with fully automated code generation, this solution also allows optional human intervention, that is, when it is difficult for the model to determine how to utilize the external information, humans may assist the model in making selection based on their knowledge and capabilities.

Although code generation technologies have made great progress in the recent two years, they still cannot replace human developers in the foreseeable future. It is very difficult for an artificial intelligence model to own the global perspective, domain knowledge, and association and inference capabilities of human developers. Scenarios where related technologies are performing well are still common simple programming tasks. Therefore, currently related products increasingly tend to be oriented to serving as an assistant that provides auxiliary functions rather than a fully automatic programming robot. In this background, significance of this application is to maximize, by combining respective advantages of a software analysis tool and an artificial intelligence model, power and a gain brought by a code generation tool to a developer, to help the developer complete efficient and high-quality development of a complex task.

This application further provides a code generation method based on the foregoing code development platform 10. The following describes the code generation method in this application in detail with reference to the accompanying drawings.

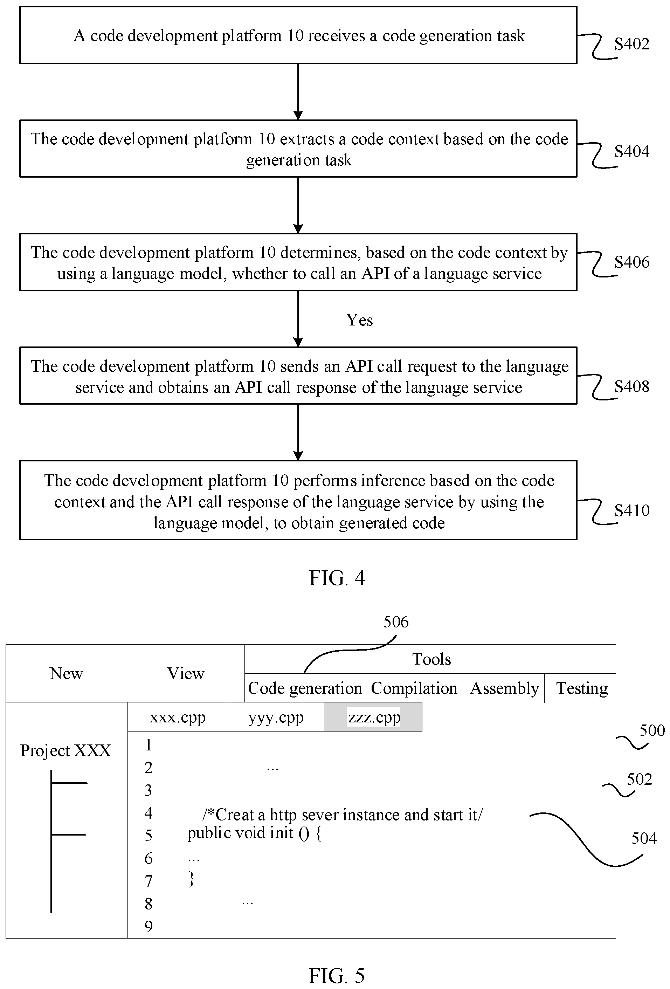

Refer to a flowchart of a code generation method shown in FIG. 4. The method includes the following steps.

S402: A code development platform 10 receives a code generation task.

The code generation task is used to generate code based on input information of a user. The code generation task may be a task that is triggered in a software project (software project) and that is used to generate code. The software project may also be referred to as a project for short, and is a project file created by a developer for software that needs to be developed when the developer performs software development. The project may include a plurality of code files, for example, code files used to implement different functions or features of the software. The code files in the project may be independently developed by one user or collaboratively developed by a plurality of users. When performing the development, the user may use a code generation capability to automatically generate the code.

The input information of the user may include at least one of task description information of the code generation task or input code. The task description information may be a task description in a natural language form. For example, when the code generation task is used to generate code of a target method or an objective function, the task description information may be a requirement description for creating the target method or the objective function, and the task description information may be generally input in a form of an annotation. The input code may include a function declaration or a method declaration. The function declaration is used as an example. The function declaration may contain a function name and a parameter name. Accordingly, the code generation task may be to generate a code fragment of a function body.

Specifically, the code development platform 10 may present a code editing interface to the user. The code editing interface may be a user interface of a code editor. The code editing interface may be a graphical user interface (graphical user interface, GUI) or a command user interface (command user interface, CUI).

For ease of description, description is made in this application by using a GUI as an example of the code editing interface. As shown in FIG. 5, a code editing interface 500 may include an editing window 502 for the code file. The user may enter task description information 504 in the editing window 502, where the task description information 504 describes the code that needs to be generated and the task description information 504 in this example may be "Creat a http sever instance and start it", and enter a method declaration 506 such as "public void init () {}". The user may trigger a code generation control 508 of the code editing interface 500, to trigger a code generation operation. Accordingly, the code development platform 10 may receive the task description information 504 and the method declaration 506 (the input code) that are entered by the user, and then perform code generation based on the task description information 504 and the method declaration 506.

It should be noted that FIG. 5 is described merely by using an example in which the input information of the user includes the task description information and the input code. In another possible implementation of embodiments of this application, the input information of the user may alternatively include the task description information or include the input code. For example, when editing some code of a method, the user may directly write the method and does not need to add the task description information in the form of an annotation. For another example, when editing some code of a method, the user may add the task description information in the form of an annotation and does not need to enter code. When entering the task description information 504 in the form of an annotation, the user may first enter a keyword of the annotation, for example, characters "/*/", a character @, or a character #, and then enter the task description information, to avoid execution of the task description information 504 when the code file is executed.

In addition, FIG. 5 is described by using an example in which the user triggers the code generation control 508 to trigger the code generation operation. During actual application, the code development platform 10 also supports triggering the code generation operation in another manner. For example, the code development platform 10 also supports triggering the code generation operation through a shortcut key or a menu (for example, a right-click menu).

S404: The code development platform 10 extracts a code context based on the code generation task.

The code context includes a code fragment related to to-be-generated code in the project. The code context is a project-level context, including not only a context (also referred to as an intra-file context) in a current code file, but also a cross-file context. The cross-file context may be a context of another code file in the project. The another code file in the project may be another code file referenced by or imported into the current code file.

S406: The code development platform 10 determines, based on the code context by using a language model, whether to call an API of a language service. If yes, S408 is performed.

Specifically, the code development platform 10 may perform code generation based on the code context by using the language model, to obtain a current result. If the current result includes an API call identifier, for example, includes <ls_request>, <request>, or <req>, the code development platform 10 determines to call the API of the language service.

S408: The code development platform 10 sends an API call request to the language service and obtains an API call response of the language service.

The code development platform 10 may determine at least one of a type, a parameter, or a timing of an API call of the language service based on the code context. Accordingly, the code development platform 10 may generate the API call request based on the type or the parameter of the API call of the language service. For example, the code development platform 10 may assemble the parameter of the API call based on an API call template of a corresponding type, to generate the API call request. The code development platform 10 may send the API call request to the language service based on the timing that is determined based on the code context.

S410: The code development platform 10 performs inference based on the code context and the API call response of the language service by using the language model, to obtain the generated code.

The code development platform 10 may concatenate the code context and the API call response of the language service, input a concatenation result (a new code context) into the language model, and perform inference by using the language model, to obtain the generated code. The language model may be a large code model. The code development platform 10 may input the concatenation result in a form of a prompt into the language model. The language model may perform inference based on the prompt. The code development platform 10 may obtain the generated code inferred by the language model. Further, to enable the language model to obtain more abundant information, the code development platform 10 may further add the API call request of the language service to the concatenation. For example, the code development platform 10 may concatenate the code context, the API call request of the language service, and the API call response of the language service, and input a concatenation result in a form of a prompt into the language model to perform inference, to obtain the generated code. When concatenating the code context, the API call request of the language service, and the API call response of the language service to generate the prompt, the code development platform 10 may further add, at a specified position of a prompt template, the code context, the API call request, and the API call response, to display and provide different types of information for the language model.

In some possible implementations, the code development platform 10 may further determine, by using the language model, whether to request user assistance. If yes, the code development platform 10 may further receive a response from the user, where the response from the user includes a selection result of the user with respect to the API call response. The code development platform 10 may concatenate the API call request, the selection result of the user with respect to the API call response, and the code context, input a concatenation result into the language model, and perform inference by using the language model, to obtain the generated code.

The code development platform 10 obtains a perplexity of the language model without the API call response and a perplexity of the language model with the API call response. The perplexity is used to measure the quality of sample prediction of a probability distribution or a probability model. A probability model with a low perplexity can better predict a sample. Specifically, in this application, the probability model may be a language model. Therefore, the perplexity may be used to measure the quality of code prediction of the language model. A language model may be regarded as a probability distribution on an entire sentence or paragraph. The language model may estimate a probability of occurrence of a line of code or a segment of code based on each token (token), and may perform normalization (normalization) by using a length (a quantity of tokens included in a line of code or a segment of code) of a line of code or a segment of code. In some examples, the perplexity may also be represented by an average branch factor (average branch factor). The average branch factor represents how many choices may be made when a next token is predicted. Generally, a smaller perplexity represents a more accurate language model and a better code generation effect. When a difference between the perplexities is greater than a threshold, for example, when the difference between the perplexity of the language model without the API call response and the perplexity of the language model with the API call response is greater than the threshold, the code development platform 10 determines to request user assistance.

The code development platform 10 may detect whether a generation result of the language model includes an identifier for requesting user assistance. Specifically, when the difference between the perplexity of the language model without the API call response and the perplexity of the language model with the API call response is greater than the threshold, the code development platform 10 may generate the identifier for requesting user assistance, for example, <user_request>, and the code development platform 10 may detect whether the generation result includes <user_request>. If yes, the code development platform 10 may determine to request user assistance.

Based on the foregoing content description, the code generation method in this application supports the language model in autonomously generating an API call token in an inference process, and sending the API call request of the language service. The type, the parameter, and the timing of the API call may be dynamically selected based on the code context instead of being limited to one or two fixed language services that are selected. In addition, the language model may autonomously determine the timing of the call, and this is more suitable for a real code development scenario. In the method, a context input to the language model is constructed by using a structure of the code context, the API call request of the language service, and the API call response of the language service, and a development process as with a human developer is simulated, so that the language model can autonomously perform weighing, comprehensively utilize the project-level code context and language service information, and focus on current key information, thereby improving prediction quality of the language model and mitigating hallucinations.

The following describes a possible implementation solution of this application in the inference phase from a perspective of human-machine interaction.

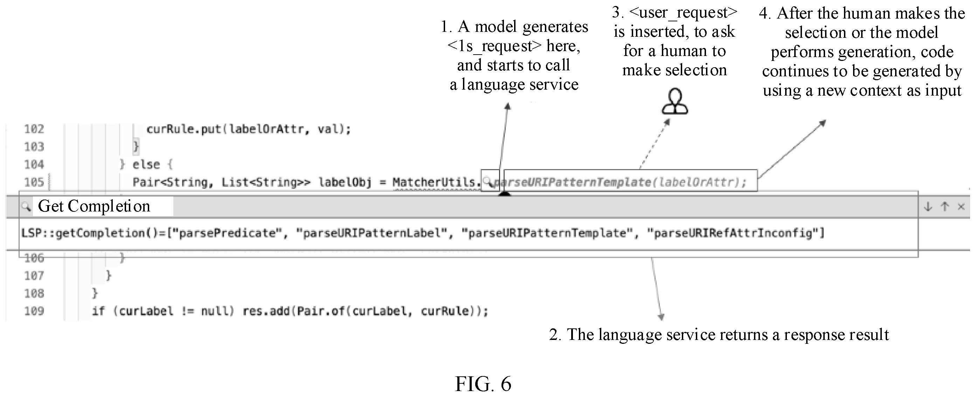

Like other similar tools, a main implementation form of this application is to serve as an extended function or plug-in of a code editor or an IDE. Therefore, a front-end interface is embodied as an auxiliary programming service tool (also referred to as an auxiliary coding tool) embedded in the IDE, such as code generation or completion. Currently, many plug-in tools for code generation provide similar experience. Different from such tools, this solution provides the following options to mark a position at which an external tool such as a language service is called. Detailed information about an API call of the language service, including a called API name, a parameter, and return content, may be displayed simply through clicking, as shown in FIG. 6.

Refer to FIG. 6. The user triggers the code generation task in the code editor or the code editing interface of the IDE. The language model may generate <ls_request> at MatcherUtils. in FIG. 6. The language model detects <ls_request> and may call the API of the language service, and then the language service returns an API call response, which is specifically LSP::getCompletion(). The language model continues to generate code based on the concatenated code context, the API call request, and the API call response, and the foregoing process is repeated until a terminator or truncation is generated. The code generation task is completed.

The inference process of the language model has been introduced in the foregoing description. The following describes the training process of the language model.

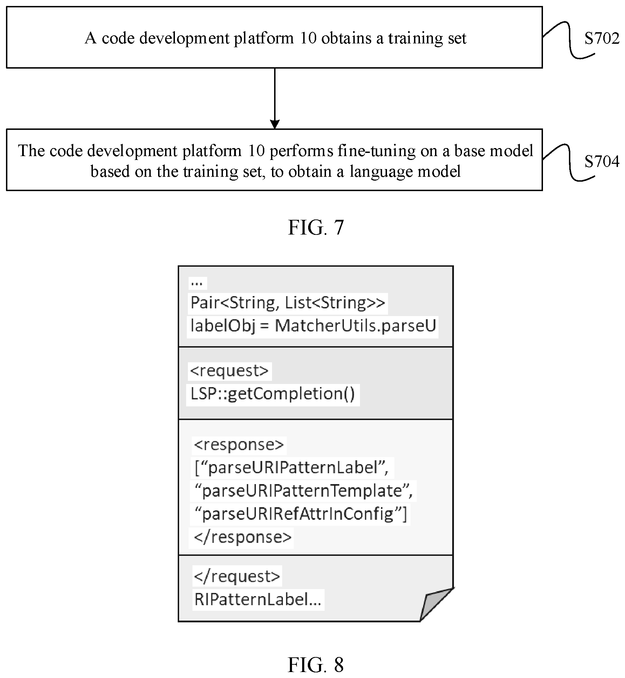

FIG. 7 is a schematic flowchart of training a language model, which specifically includes the following steps.

S702: A code development platform 10 obtains a training set.

The training set includes training data that carries an API call. To empower the language model with the capability of autonomously calling an API of a language service and interacting in real time with an external tool such as the language service, this application introduces special tokens used to mark an API call request and an API call response. For example, <ls_request> and </ls_request> are used as API call request tokens, <ls_response> and </ls_response> are used as API call response tokens, and then the API call request and the API call response are added to a code context, to obtain the training data that carries an API call. The language service may be an auxiliary programming service, for example, a code generation service or a code completion service of an IDE.

For ease of understanding, this application further provides an example of training data that carries an API call. FIG. 8 shows a code format of a piece of training data. The training data includes a code context, an API call request, and an API call response. The code context includes a code fragment before <ls_request> in FIG. 8, the API call request includes a code fragment following <ls_request>, for example, LSP::getCompletion(), and the API call response includes a code fragment following <ls_response>. The API call response may be inserted into the API call request.

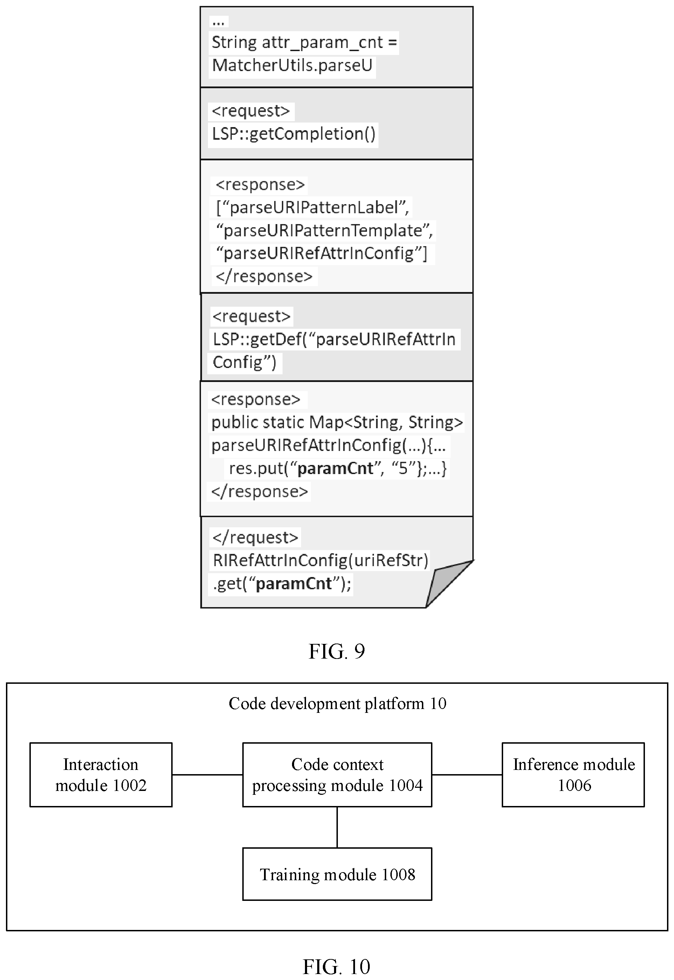

Further, an API call form design allows the language model to call the API in a chained manner to simulate human behaviors in a complex scenario. For a code format for calling the API in the chained manner, refer to FIG. 9. For example, for one API call request, after an API call response is inserted, an API call request may continue to be initiated, and then an API call response corresponding to the API call request is inserted. In an example in FIG. 9, an API call response of LSP::getCompletion(), for example, parseURIPatternLable, parseURIPatternTemplate and parseURIRefAttrInConfig, is inserted into training data; and an API call request LSP::getDef("parseURIRefAttrInConfig") and an API call response corresponding to the API call request continue to be inserted.

To construct a high-quality and diversified training set for the language model to learn a timing of and a method for calling the API, the code development platform 10 may collect the training data by using different manners or channels. Specifically, the code development platform 10 may generate the training data according to a heuristic rule constructed based on a scenario in which a human developer calls the language service, and construct a heuristic rule algorithm based on a scenario in which there is a high probability that the human developer calls the language service, for example, a scenario of member reference, object construction, or function calling, thereby implementing a basic capability of constructing the language model at a low cost. Alternatively, the code development platform 10 may construct the training data based on an interaction event record of an integrated development environment IDE. By collecting real behaviors of the human developer, the code development platform 10 can improve reliability and diversity of the training data, thereby improving a generalization capability of the language model. The code development platform 10 may alternatively construct the training data based on annotation information of the user. The annotation information is used to annotate code hallucination. The manual annotation manner may enhance the capability of the language model to cope with a scenario in which hallucination frequently occurs.

S704: The code development platform 10 performs fine-tuning on a base model based on the training set, to obtain the language model.

The code development platform 10 may perform, based on the training set, fine-tuning on the base model through tool learning, to obtain the language model. The base model may be a pre-trained model, for example, a pre-trained LLM. Tool learning may be classified mainly into two types: tool-augmented learning (tool-augmented learning) and tool-oriented learning (tool-oriented learning). A core difference lies in whether the base model is enhanced through tool execution (where a tool serves AI) or the use of the tool is optimized through the base model (where AI serves the tool).

Tool-augmented learning is used as an example for description. Tool-augmented learning uses execution results of various external tools to enhance the performance of the base model. In this paradigm, an execution result of an external tool, such as a language service, is considered as external information used to assist in generating high-quality output. A return result or output of the external tool such as the language service is used as additional information to assist the language model in performing code generation, thereby resolving factual inaccuracy during generation of the language model, especially the LLM.

In some possible implementations, the training set further includes training data that does not carry an API call. The training data that does not carry an API call includes a code context sample and a predicted code sample. Accordingly, the code development platform 10 may perform hybrid fine-tuning on the base model based on the training data that carries an API call and the training data that does not carry an API call, to obtain the language model.

It should be noted that an embodiment in FIG. 7 may be independently implemented, or may be combined with the foregoing embodiments. This is not limited in this application.

In the method, by constructing high-quality and diversified training data in a training phase, the language model is empowered with the capability of calling the language service, so that the language model serves as a core for commanding and scheduling, and the language service serves as a tool aid. In this way, a training process can be aligned to an inference process, to build an intelligent framework in which the language model serves as a scheduling center.

This application further provides a code development platform 10 based on the foregoing code generation method. As shown in FIG. 10, the code development platform 10 includes:
an interaction module 1002, configured to receive a code generation task, where the code generation task is used to perform code generation based on input information of a user;
a code context processing module 1004, configured to extract a code context based on the code generation task, where the code context includes a code fragment related to to-be-generated code in a project; and
an inference module 1006, configured to determine, based on the code context by using a language model, whether to call an application programming interface API of a language service.

The code context processing module 1004 is further configured to: when it is determined to call the API of the language service, send an API call request to the language service and obtain an API call response of the language service, where the language service is used to assist in generating the code, and the API call response includes at least one recommended result of the language service.

The inference module 1006 is further configured to perform inference based on the code context and the API call response of the language service by using the language model, to obtain the generated code.

The interaction module 1002, the code context processing module 1004, and the inference module 1006 may be modules in the inference platform 100 in the embodiment in FIG. 1. The interaction module 1002 is not shown in FIG. 1. The code context processing module 1004 may be a module that performs code context processing in FIG. 1. The inference module 1006 may be a module that performs inference in FIG. 1, and may be implemented by calling the language model.

For example, the interaction module 1002, the code context processing module 1004, and the inference module 1006 may be implemented by using hardware, or may be implemented by using software.

When being implemented by using software, the interaction module 1002, the code context processing module 1004, and the inference module 1006 may be applications running on a compute device, for example, compute engines. The application may be provided through a virtualization service for the user to use. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts by using a virtualization technology, to provide a VM on demand for the user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a computer in a logical sense. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, processes, and resources. It should be understood that the VM service, the BMS service, and the container service in the virtualization service are merely used as specific examples. During actual application, the virtualization service may alternatively be another lightweight or heavyweight virtualization service. This is not specifically limited herein.

When being implemented by using hardware, the interaction module 1002, the code context processing module 1004, and the inference module 1006 may include at least one compute device, for example, a server. Alternatively, the interaction module 1002, the code context processing module 1004, and the inference module 1006 may be devices implemented by using an application-specific integrated circuit (application-specific integrated circuit, ASIC), a programmable logic device (programmable logic device, PLD), or the like. The PLD may be implemented by using a complex programmable logic device (complex programmable logic device, CPLD), a field-programmable gate array (field-programmable gate array, FPGA), generic array logic (generic array logic, GAL), or any combination thereof.

In some possible implementations, the inference module 1006 is specifically configured to:
perform code generation based on the code context by using the language model, to obtain a current result; and
if the current result includes an API call identifier, determine to call the API of the language service.

In some possible implementations, the inference module 1006 is further configured to:
predict, by using the language model, whether to request user assistance; and
the interaction module 1002 is further configured to: if yes, receive a response from the user, where the response from the user includes a selection result of the user with respect to the API call response.

In some possible implementations, the inference module 1006 is specifically configured to:
obtain a perplexity of the language model without the API call response and a perplexity of the language model with the API call response; and
when a difference between the perplexities is greater than a threshold, determine to request user assistance.

In some possible implementations, the inference module 1006 is specifically configured to:
detect whether a generation result of the language model includes an identifier for requesting user assistance; and
if yes, determine to request user assistance.

In some possible implementations, the code context processing module 1004 is further configured to:
determine at least one of a type, a parameter, or a timing of an API call of the language service based on the code context; and
the code context processing module 1004 is specifically configured to:
   generate the API call request based on the type or the parameter of the API call of the language service; and
   send the API call request to the language service based on the timing.

In some possible implementations, the code development platform 10 further includes:
a training module 1008, configured to obtain a training set, where the training set includes training data that carries an API call, and the training data that carries an API call includes a project-level code context sample, an API call response sample, and a predicted code sample; and
the training module 1008 is further configured to perform fine-tuning on a base model based on the training set, to obtain the language model.

The training module 1008 may be implemented by using hardware or software.

When being implemented by using software, the training module 1008 may be an application, for example, a compute engine, running on a compute device. The application may be provided through a virtualization service, such as a VM service, a BMS service, or a container service, for the user to use. When being implemented by hardware, the training module 1008 may include at least one compute device, for example, a server. Alternatively, the training module 1008 may be a device implemented by using an ASIC, a PLD, or the like.

In some possible implementations, the training set further includes training data that does not carry an API call, and the training data that does not carry an API call includes a code context sample and a predicted code sample; and
the training module 1008 is specifically configured to:
perform hybrid fine-tuning on the base model based on the training data that carries an API call and the training data that does not carry an API call, to obtain the language model.

In some possible implementations, the training module 1008 is specifically configured to:
generate the training data according to a heuristic rule constructed based on a scenario in which a human developer calls the language service; or
construct the training data based on an interaction event record of an integrated development environment IDE; or
construct the training data based on annotation information of the user.

In some possible implementations, the language service includes an auxiliary programming service.

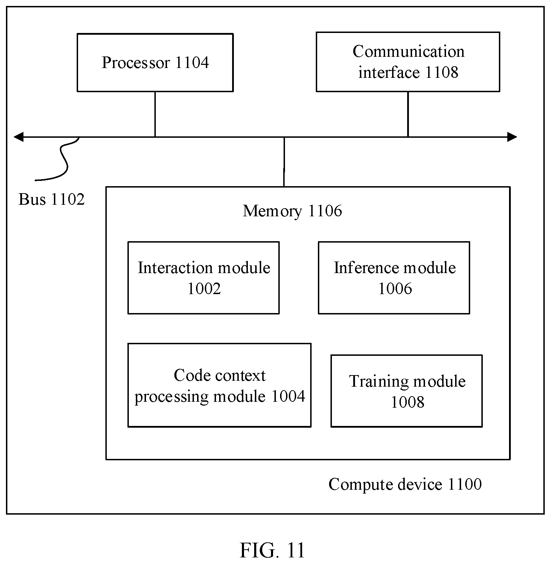

This application further provides a compute device 1100. As shown in FIG. 11, the compute device 1100 includes a bus 1102, a processor 1104, a memory 1106, and a communication interface 1108. The processor 1104, the memory 1106, and the communication interface 1108 communicate with each other through the bus 1102. The compute device 1100 may be a server or a terminal device. It should be understood that quantities of processors and memories in the compute device 1100 are not limited in this application.

The bus 1102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 11, but this does not mean that there is only one bus or only one type of bus. The bus 1102 may include a path for transferring information between components (for example, the memory 1106, the processor 1104, and the communication interface 1108) of the compute device 1100.

The processor 1104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1106 may include a volatile memory (volatile memory), for example, a random access memory (random access memory, RAM). The memory 1106 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 1106 stores executable program code. The processor 1104 executes the executable program code to implement the foregoing code generation method. Specifically, the memory 1106 stores instructions used by the code development platform 10 to perform the code generation method.

The communication interface 1108 uses a transceiver module, for example, but not limited to, a network interface card or a transceiver, to implement communication between the compute device 1100 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

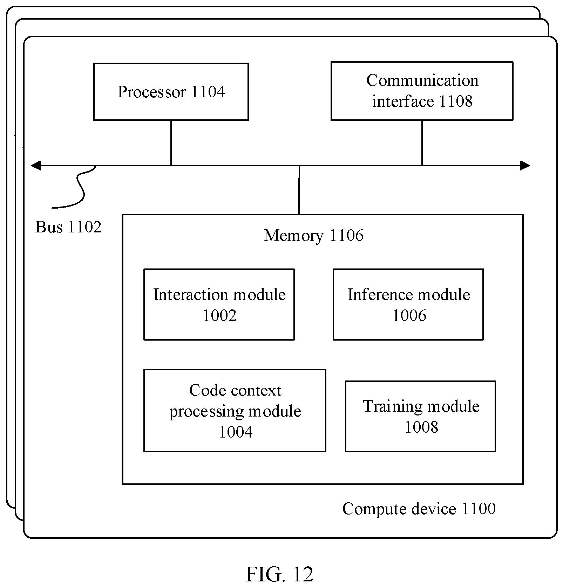

As shown in FIG. 12, the compute device cluster includes at least one compute device 1100. A memory 1106 in one or more compute devices 1100 in the compute device cluster may store same instructions used by the code development platform 10 to perform the code generation method.

In some possible implementations, the one or more compute devices 1100 in the compute device cluster may alternatively be configured to execute some instructions used by the code development platform 10 to perform the code generation method. In other words, a combination of the one or more compute devices 1100 may collectively execute the instructions used by the code development platform 10 to perform the code generation method.

It should be noted that the memories 1106 in different compute devices 1100 in the compute device cluster may store different instructions for performing some functions of the code development platform 10.

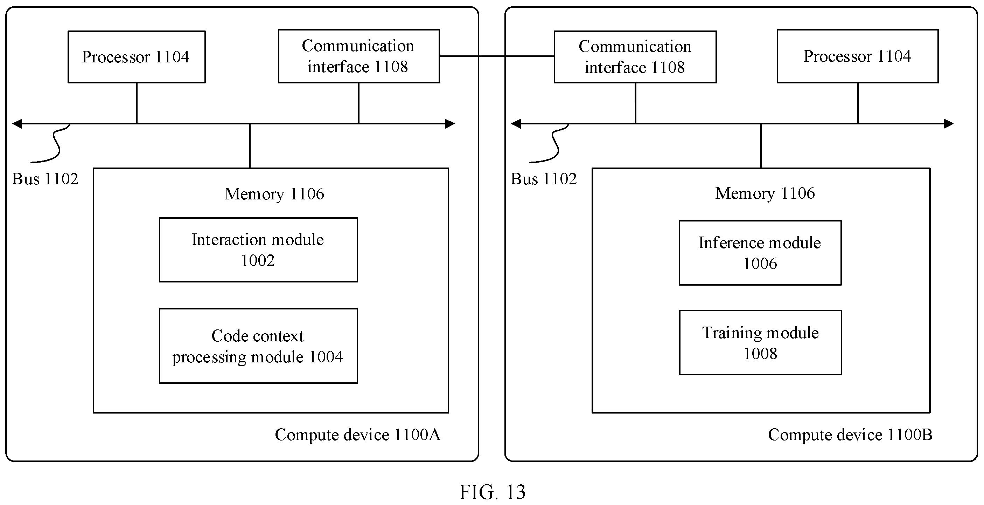

FIG. 13 shows a possible implementation. As shown in FIG. 13, two compute devices 1100A and 1100B are connected through a communication interface 1108. A memory in the compute device 1100A stores instructions for performing functions of the interaction module 1002 and the code context processing module 1004. A memory in the compute device 1100B stores instructions for performing functions of the inference module 1006. Further, the memory of the compute device 1100B may further store instructions for performing functions of the training module 1008. In other words, the memories 1106 of the compute devices 1100A and 1100B collectively store the instructions used by the code development platform 10 to perform the code generation method.

A connection manner between compute device clusters shown in FIG. 13 may be that, considering that a large quantity of computational power resources are needed for model inference or model training in the code generation method provided in this application, the functions implemented by the inference module 1006 and the training module 1008 are delivered to the compute device 1100B for execution.

It should be understood that functions of the compute device 1100A shown in FIG. 13 may alternatively be completed by a plurality of compute devices 1100. Similarly, functions of the compute device 1100B may alternatively be completed by a plurality of compute devices 1100.

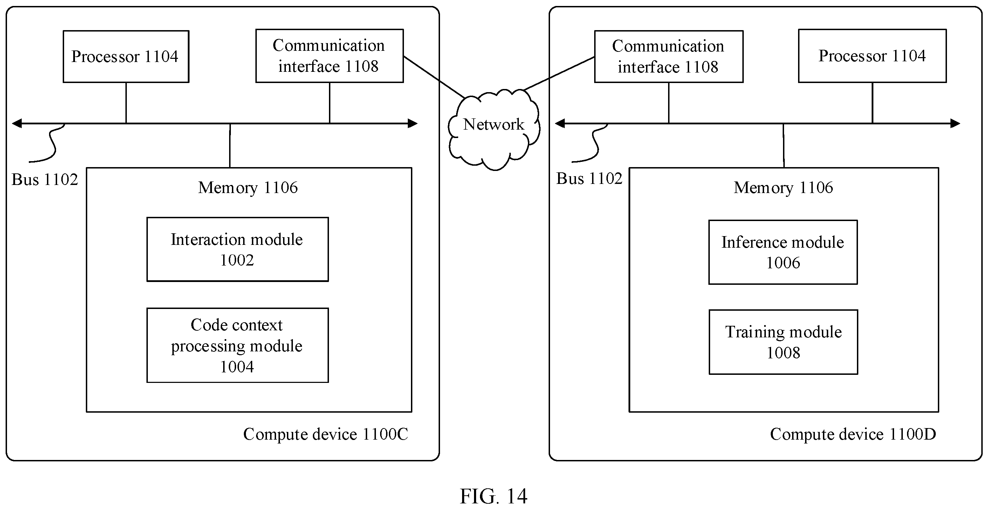

In some possible implementations, the one or more compute devices in the compute device cluster may be connected through a network. The network may be a wide area network, a local area network, or the like. FIG. 14 shows a possible implementation. As shown in FIG. 14, two compute devices 1100C and 1100D are connected through a network. Specifically, each compute device is connected to the network through a communication interface in the compute device. In this type of possible implementation, a memory 1106 in the compute device 1100C stores instructions for performing functions of the interaction module 1002 and the code context processing module 1004. In addition, a memory 1106 in the compute device 1100D stores instructions for performing functions of the inference module 1006 and the training module 1008.

A connection manner between compute device clusters shown in FIG. 14 may be that, considering that substantial computational power resources are needed for model inference or model training in the code generation method provided in this application, the functions implemented by the inference module 1006 and the training module 1008 are delivered to the compute device 1100D for execution.

It should be understood that functions of the compute device 1100C shown in FIG. 14 may alternatively be completed by a plurality of compute devices 1100. Similarly, functions of the compute device 1100D may alternatively be completed by a plurality of compute devices 1100.

An embodiment of this application further provides a computer-readable storage medium. The computer-readable storage medium may be any usable medium that can be stored by a compute device, or a data storage device such as a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a compute device to perform the foregoing code generation method applied to the code development platform 10.

An embodiment of this application further provides a computer program product including instructions. The computer program product may be software or a program product that includes the instructions and that can run on a compute device or can be stored in any usable medium. When the computer program product runs on at least one compute device, the at least one compute device is enabled to perform the foregoing code generation method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions in embodiments of the present invention.

## Claims

1. A code generation method, wherein the method comprises:
receiving, by a code development platform, a code generation task, wherein the code generation task is used to perform code generation based on input information of a user;
extracting, by the code development platform, a code context based on the code generation task, wherein the code context comprises a code fragment related to to-be-generated code in a project;
determining, by the code development platform based on the code context by using a language model, whether to call an application programming interface API of a language service;
when it is determined to call the API of the language service, sending, by the code development platform, an API call request to the language service, and obtaining an API call response of the language service, wherein the language service is used to assist in generating the code, and the API call response comprises at least one recommended result of the language service; and
performing, by the code development platform, inference based on the code context and the API call response of the language service by using the language model, to obtain the generated code.

2. The method according to claim 1, wherein determining, by the code development platform based on the code context by using the language model, whether to call the application programming interface API of the language service comprises:
performing, by the code development platform, code generation based on the code context by using the language model, to obtain a current result; and
if the current result comprises an API call identifier, determining to call the API of the language service.

3. The method according to claim 1 or 2, wherein the method further comprises:
predicting, by the code development platform by using the language model, whether to request user assistance; and
if yes, receiving, by the code development platform, a response from the user, wherein the response from the user comprises a selection result of the user with respect to the API call response.

4. The method according to claim 3, wherein determining, by the code development platform by using the language model, whether to request user assistance comprises:
obtaining, by the code development platform, a perplexity of the language model with the API call response and a perplexity of the language model with the API call response; and
when a difference between the perplexities is greater than a threshold, determining, by the code development platform, to request user assistance.

5. The method according to claim 3, wherein determining, by the code development platform by using the language model, whether to request user assistance comprises:
detecting, by the code development platform, whether a generation result of the language model comprises an identifier for requesting user assistance; and
if yes, determining, by the code development platform, to request user assistance.

6. The method according to any one of claims 1 to 5, wherein the method further comprises:
determining, by the code development platform, at least one of a type, a parameter, or a timing of an API call of the language service based on the code context; and
sending, by the code development platform, the API call request to the language service comprises:
generating, by the code development platform, the API call request based on the type or the parameter of the API call of the language service; and
sending, by the code development platform, the API call request to the language service based on the timing.

7. The method according to any one of claims 1 to 6, wherein the method further comprises:
obtaining, by the code development platform, a training set, wherein the training set comprises training data that carries an API call, and the training data that carries an API call comprises a project-level code context sample, an API call response sample, and a predicted code sample; and
performing, by the code development platform, fine-tuning on a base model based on the training set, to obtain the language model.

8. The method according to claim 7, wherein the training set further comprises training data that does not carry an API call, and the training data that does not carry an API call comprises a code context sample and a predicted code sample; and
performing, by the code development platform, fine-tuning on the base model based on the training set, to obtain the language model comprises:
performing, by the code development platform, hybrid fine-tuning on the base model based on the training data that carries an API call and the training data that does not carry an API call, to obtain the language model.

9. The method according to claim 7 or 8, wherein the training data is collected in the following manner:
generating, by the code development platform, the training data according to a heuristic rule constructed based on a scenario in which a human developer calls the language service; or
constructing, by the code development platform, the training data based on an interaction event record of an integrated development environment IDE; or
constructing, by the code development platform, the training data based on annotation information of the user.

10. The method according to any one of claims 1 to 9, wherein the language service comprises an auxiliary programming service.

11. A code development platform, wherein the code development platform comprises:
an interaction module, configured to receive a code generation task, wherein the code generation task is used to perform code generation based on input information of a user;
a code context processing module, configured to extract a code context based on the code generation task, wherein the code context comprises a code fragment related to to-be-generated code in a project; and
an inference module, configured to determine, based on the code context by using a language model, whether to call an application programming interface API of a language service;
the code context processing module is further configured to: when it is determined to call the API of the language service, send an API call request to the language service and obtain an API call response of the language service, wherein the language service is used to assist in generating the code, and the API call response comprises at least one recommended result of the language service; and
the inference module is further configured to perform inference based on the code context and the API call response of the language service by using the language model, to obtain the generated code.

12. The code development platform according to claim 11, wherein the inference module is specifically configured to:
perform code generation based on the code context by using the language model, to obtain a current result; and
if the current result comprises an API call identifier, determine to call the API of the language service.

13. The code development platform according to claim 11 or 12, wherein the inference module is further configured to:
predict, by using the language model, whether to request user assistance; and
the interaction module is further configured to: if yes, receive a response from the user, wherein the response from the user comprises a selection result of the user with respect to the API call response.

14. The code development platform according to claim 13, wherein the inference module is specifically configured to:
obtain a perplexity of the language model without the API call response and a perplexity of the language model with the API call response; and
when a difference between the perplexities is greater than a threshold, determine to request user assistance.

15. The code development platform according to claim 13, wherein the inference module is specifically configured to:
detect whether a generation result of the language model comprises an identifier for requesting user assistance; and
if yes, determine to request user assistance.

16. The code development platform according to any one of claims 11 to 15, wherein the code context processing module is further configured to:
determine at least one of a type, a parameter, or a timing of an API call of the language service based on the code context; and
the code context processing module is specifically configured to:
generate the API call request based on the type or the parameter of the API call of the language service; and
send the API call request to the language service based on the timing.

17. The code development platform according to any one of claims 11 to 16, wherein the code development platform further comprises:
a training module, configured to obtain a training set, wherein the training set comprises training data that carries an API call, and the training data that carries an API call comprises a project-level code context sample, an API call response sample, and a predicted code sample; and
the training module is further configured to perform fine-tuning on a base model based on the training set, to obtain the language model.

18. The code development platform according to claim 17, wherein the training set further comprises training data that does not carry an API call, and the training data that does not carry an API call comprises a code context sample and a predicted code sample; and
the training module is specifically configured to:
perform hybrid fine-tuning on the base model based on the training data that carries an API call and the training data that does not carry an API call, to obtain the language model.

19. The code development platform according to claim 17 or 18, wherein the training module is specifically configured to:
generate the training data according to a heuristic rule constructed based on a scenario in which a human developer calls the language service; or
construct the training data based on an interaction event record of an integrated development environment IDE; or
construct the training data based on annotation information of the user.

20. The code development platform according to any one of claims 11 to 19, wherein the language service comprises an auxiliary programming service.

21. A compute device cluster, wherein the compute device cluster comprises at least one compute device, the at least one compute device comprises at least one processor and at least one memory, the at least one memory stores computer-readable instructions, and the at least one processor executes the computer-readable instructions, to enable the compute device cluster to perform the code generation method according to any one of claims 1 to 10.

22. A computer-readable storage medium, comprising computer-readable instructions, wherein the computer-readable instructions are used to implement the code generation method according to any one of claims 1 to 10.

23. A computer program product, comprising computer-readable instructions, wherein the computer-readable instructions are used to implement the code generation method according to any one of claims 1 to 10.
